# FASCICULE DE BREVET EUROPEEN

(11) **EP 4 249 611 B1**
(45) Date de publication et mention de la délivrance du brevet: **30.04.2025**
(21) Numéro de dépôt: 23305373.5
(22) Date de dépôt: 20.03.2023
(51) Int. Cl.: C14B 1/56, B32B 7/12, B32B 9/02, C14B 7/04, B32B 9/04

(54) **PROCÉDÉ DE FABRICATION D'UN ÉLÉMENT D'ORNEMENT ET/OU DE REVÊTEMENT EN CUIR OU EN SUCCÉDANÉ DU CUIR OU ANALOGUE, À FIXER SUR UN SUPPORT DE SORTE À FORMER UN ARTICLE PAR EXEMPLE D'AMEUBLEMENT, DE MAROQUINERIE, DE BAGAGERIE, DE BIJOUTERIE**
VERFAHREN ZUR HERSTELLUNG EINES ZIER- UND/ODER VERKLEIDUNGSELEMENTS AUS LEDER ODER DERGLEICHEN, ZUR BEFESTIGUNG AN EINEM TRÄGER ZUR BILDUNG EINES ARTIKELS, INSBESONDERE EINES MÖBELSTÜCKS, EINES LEDERSTÜCKS, EINES SCHMUCKSTÜCKS
METHOD FOR PRODUCING A LEATHER OR LEATHER SUBSTITUTE OR SIMILAR DECORATIVE AND/OR COVERING ELEMENT TO BE FASTENED TO A SUPPORT FOR FURNISHING, LEATHER GOODS, JEWELLERY

(30) Priorité: 21.03.2022 FR 2202468
(43) Date de publication de la demande: 27.09.2023
(73) Titulaire: Hermes Sellier, 75008 Paris (FR)
(72) Inventeur: DARTOEN, Méliana, 93100 MONTREUIL (FR); LIEVIN, Léa, 93700 DRANCY (FR)
(74) Mandataire: Santarelli

(56) Documents cités:
- FR-A1- 2 913 028
- JP-U- S4 949 173
- US-A- 1 862 878
- US-A- 3 034 161

## Description

### Domaine technique de l'invention

La présente invention concerne un procédé de fabrication d'un élément d'ornement et/ou de revêtement en cuir ou en succédané du cuir ou analogue, à fixer sur un support de sorte à former un article par exemple d'ameublement, de maroquinerie, de bagagerie, de bijouterie.

### Etat de la technique

On connaît des articles par exemple de maroquinerie, de bagagerie, de bijouterie, d'articles en cuir ou en succédané du cuir ou analogue, etc. qui sont pourvus d'un support sur lequel est rapporté au moins un élément d'ornement ou de revêtement.

La demande de brevet FR 2 362 725 décrit un matériau composite en feuille, utilisable notamment comme revêtement mural, élément d'ameublement, revêtement de siège et tout élément de décoration, ainsi qu'en maroquinerie et confection. En particulier, ce matériau comprend une pluralité d'éléments prédécoupés et assemblés par fixation sur un support en feuille commun en matériau imputrescible. Le procédé de fabrication de ce matériau composite en feuille, consiste à réaliser un pré-assemblage des éléments prédécoupés, sur leur face envers, à l'aide de rubans adhésifs puis à réaliser leur fixation sur le support commun par collage, et de préférence par thermocollage à l'aide d'une colle activable à chaud telle qu'une résine synthétique.

La demande de brevet EP 1 333 104 décrit un procédé de fabrication d'un matériau composite en nappes, lequel est destiné à la réalisation d'articles de maroquinerie, de bagagerie, de bijouterie, d'articles en cuir ou en succédané du cuir ou analogue. En particulier, pour réaliser un tel matériau, il est décrit qu'il faut partir d'une première et d'une seconde nappes essentiellement continues et d'un insert essentiellement discontinu et présentant une certaine rigidité locale, interposer l'insert entre la première et la seconde nappes, assurer la solidarisation du sandwich comprenant la première et la seconde nappes et l'insert placé entre elles deux, presser le sandwich de manière à réaliser le matériau composite dont au moins une des nappes présente sur sa face extérieure des reliefs en correspondance avec les discontinuités de l'insert.

La demande de brevet FR 2 913 028 décrit un procédé de réalisation de pièces de revêtement en cuir, succédané de cuir ou similaire, qui sont utilisées par exemple pour réaliser des parquets, des cloisons ou pour revêtir des murs, des portes ou divers objets. En particulier, les pièces sont faites à partir d'une pluralité de bandes de cuir, succédané de cuir ou similaires qui sont disposées selon une même direction longitudinale, superposées et associées les unes avec les autres de sorte à former un bloc compact de bandes superposées, puis le bloc est découpé selon une direction transversale sensiblement perpendiculaire à la direction longitudinale et/ou selon la direction longitudinale de sorte à former des pièces de revêtement en cuir d'épaisseur choisie.

Le brevet US 1,862,878 décrit un procédé de fabrication d'un talon de chaussure et en particulier la fabrication d'un revêtement à apposer sur un tel talon, lequel revêtement est formé d'une pluralité de fines lamelles fixées ensemble en bord-à-bord et s'étendant autour de l'arrière et des côtés d'un corps du talon, avec les fines lamelles qui peuvent présenter une largeur constante ou variable suivant l'endroit où elles sont fixées sur le corps de talon.

### Exposé de l'invention

L'invention vise à fournir un procédé de fabrication d'un élément d'ornement et/ou de revêtement en cuir ou en succédané du cuir ou analogue, à fixer sur un support de sorte à former un article par exemple d'ameublement, de maroquinerie, de bagagerie, de bijouterie, qui soit particulièrement simple et commode.

L'invention a ainsi pour objet, sous un premier aspect, un procédé de fabrication d'au moins un élément d'ornement et/ou de revêtement en cuir ou en succédané du cuir ou analogue, à fixer sur un support de sorte à former un article par exemple d'ameublement, de maroquinerie, de bagagerie et/ou de bijouterie, comportant les étapes :
- de fournir une pluralité de bandes en cuir ou en succédané du cuir ou analogue, chaque bande s'étendant globalement longitudinalement et présentant une épaisseur variable depuis une première extrémité d'épaisseur la plus fine vers une deuxième extrémité opposée à la première extrémité ;
- d'assembler la pluralité de bandes par superposition pour former un bloc de bandes présentant une première extrémité amincie formée par les premières extrémités les plus fines de la pluralité de bandes et une deuxième extrémité opposée à la première extrémité amincie et formée par les deuxièmes extrémités de la pluralité de bandes, le bloc présentant une épaisseur variable formée par la sommes des épaisseurs variables de la pluralité de bandes ;
- de trancher le bloc de bandes selon une direction transversale à la direction longitudinale d'extension de la pluralité de bandes pour obtenir des tranches d'épaisseur prédéterminée ; et
- d'assembler solidairement une pluralité de tranches et/ou de portions de tranches formant des sous-éléments d'ornement et/ou de revêtement de sorte à obtenir un élément d'ornement et/ou de revêtement présentant un motif défini.

Conformément au procédé de fabrication selon l'invention, il est possible de former des sous-éléments d'ornement et/ou de revêtement présentant des faces principales obtenues à partir des tranches des bandes et donc du derme comportant principalement la chair et la fleur de cuir ou succédané du cuir ou analogue, plutôt qu'à partir des faces externes des bandes, et qui présentent au surplus une apparence associée aux épaisseurs variables des bandes. Ceci permet, une fois les sous-éléments d'ornement et/ou de revêtement assemblés, de former un élément d'ornement et/ou de revêtement présentant un motif prédéfini et qui peut ensuite être fixé sur un support de sorte à former un article par exemple d'ameublement, de maroquinerie, de bagagerie, de bijouterie.

D'autres caractéristiques particulièrement simples et commodes du procédé selon l'invention sont décrites ci-après.

Le procédé peut comporter les étapes de fournir un moule de fendage, de fournir des bandes d'épaisseur globalement constante, de positionner chacune des bandes sur le moule et de fendre chaque bande ainsi positionnée pour obtenir les bandes d'épaisseur variable depuis la première extrémité d'épaisseur la plus fine vers la deuxième extrémité.

Le procédé peut comporter une étape de collage de la pluralité de bandes par superposition pour former le bloc de bandes.

Le procédé peut comporter une étape de fournir au moins un patron, une étape de disposer chaque tranche sur le patron et une étape de découper la tranche au format du patron pour obtenir une portion de tranche respective.

Le procédé peut comporter une étape de collage en bord à bord de la pluralité de tranches et/ou de portions de tranches formant des sous-éléments d'ornement et/ou de revêtement.

Le procédé peut comporter une étape de fourniture d'un film et une étape de collage de la pluralité de tranches et/ou de portions de tranches formant des sous-éléments d'ornement et/ou de revêtement assemblés sur le film.

Le procédé peut comporter une étape de fourniture d'un support, par exemple rigide ou semi-rigide, et une étape d'assujettir mécaniquement sur ce support un ou plusieurs éléments d'ornement selon un motif défini, l'ensemble pouvant équiper un article par exemple d'ameublement, de maroquinerie, de bagagerie, de bijouterie.

Au moins une bande présente une épaisseur variable définie par un profil d'épaisseur prédéterminé depuis la première extrémité vers la deuxième extrémité.

Au moins une bande présente une épaisseur variable définie par un profil d'épaisseur continument progressif depuis la première extrémité vers la deuxième extrémité.

Au moins une bande présente une épaisseur variable définie par un profil d'épaisseur non continument progressif depuis la première extrémité vers la deuxième extrémité.

Chaque bande de la pluralité de bandes présente globalement le même profil d'épaisseur prédéterminé.

Les bandes de la pluralité de bandes présentent globalement des profils d'épaisseurs au moins partiellement différents.

L'élément d'ornement et/ou de revêtement obtenu selon le procédé tel que décrit ci-dessus est formé d'une pluralité de tranches et/ou de portions de tranches, formant des sous-éléments d'ornement et/ou de revêtement, qui sont assemblées solidairement, lesquelles tranches ou portions de tranches sont d'épaisseur prédéterminée et tranchées dans un bloc de bandes selon une direction transversale à la direction longitudinale d'extension d'une pluralité de bandes en cuir ou en succédané du cuir ou analogue qui s'étendent globalement longitudinalement et qui présentent une épaisseur variable depuis une première extrémité d'épaisseur la plus fine vers une deuxième extrémité opposée à la première extrémité, lequel bloc de bandes est formé d'un assemblage par superposition de la pluralité de bandes et présente une épaisseur variable formée par la sommes d'épaisseurs variables de la pluralité de bandes, avec une première extrémité amincie formée par les premières extrémités les plus fines de la pluralité de bandes et une deuxième extrémité opposée à la première extrémité amincie et formée par les deuxièmes extrémités de la pluralité de bandes.

### Brève description des figures

L'invention, selon un exemple de réalisation, sera bien comprise et ses avantages apparaitront mieux à la lecture de la description détaillée qui suit, donnée à titre indicatif et nullement limitatif, en référence aux dessins annexés et brièvement décrits ci-dessous.
La figure 1 est un schéma blocs représentant différentes étapes d'un procédé de fabrication d'un élément d'ornement et/ou de revêtement en cuir ou en succédané du cuir ou analogue, selon l'invention.
La figure 2 représente schématiquement en perspective une étape du procédé de la figure 1.
La figure 3 représente schématiquement en perspective une autre étape du procédé de la figure 1.
La figure 4 représente schématiquement en perspective encore une autre étape du procédé de la figure 1.
La figure 5 illustre schématiquement en perspective une bande fendue obtenue suite à la mise en œuvre des étapes du procédé visibles sur les figures 2 à 4.
La figure 6 illustre schématiquement en perspective un bloc de bandes fendues telles que visible sur la figure 5 et qui sont assemblées lors de la mise en œuvre d'une autre étape du procédé de la figure 1.
La figure 7 illustre schématiquement en vue de côté le bloc de la figure 6.
La figure 8 illustre schématiquement une tranche d'une première épaisseur prédéterminée du bloc de bandes fendues tel que visible sur la figure 6 et qui est obtenue lors de la mise en œuvre d'une autre étape du procédé de la figure 1.
La figure 9 est une vue similaire à celle de la figure 8, mais montrant une tranche d'une seconde épaisseur prédéterminée inférieure à la première épaisseur prédéterminée.
La figure 10 représente schématiquement en perspective une autre étape du procédé de la figure 1, partant d'une tranche telle que visible à la figure 9 et en vue d'obtenir un sous-élément d'ornement et/ou de revêtement.
La figure 11 représente schématiquement en perspective une autre étape du procédé de la figure 1 et en particulier l'assemblage de plusieurs sous-éléments d'ornement et/ou de revêtement tels que visibles sur la figure 10.
La figure 12 représente schématiquement en perspective encore une autre étape du procédé de la figure 1 et en particulier le collage de l'assemblage visible sur la figure 11 et son collage sur un film.
La figure 13 représente schématiquement en perspective encore une autre étape du procédé de la figure 1 et en particulier le montage de l'assemblage visible sur la figure 12 sur un support pour former un article par exemple d'ameublement, de maroquinerie, de bagagerie, de bijouterie, comportant un support sur lequel est fixé au moins un tel élément d'ornement et/ou de revêtement en cuir ou en succédané du cuir.

### Description détaillée

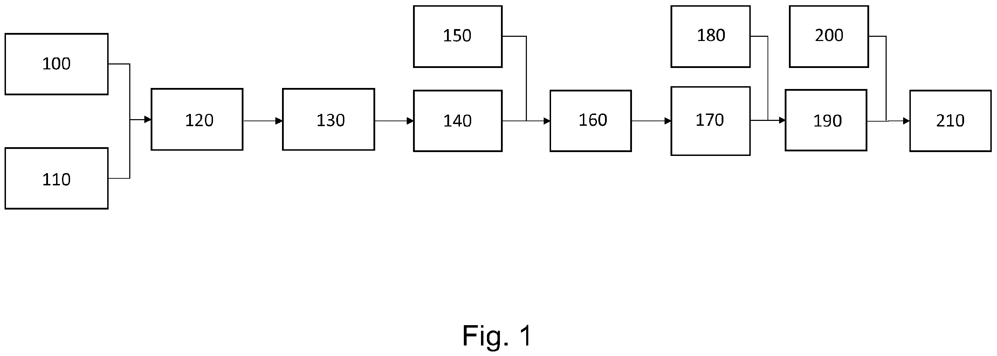

La figure 1 est un schéma blocs représentant différentes étapes d'un procédé de fabrication d'un élément d'ornement et/ou de revêtement en cuir ou en succédané du cuir ou analogue.

En particulier, dans l'exemple illustré, le procédé de fabrication comporte l'étape 100 de fournir une pluralité de bandes de cuir ou en succédané du cuir ou analogue, chacune s'étendant globalement longitudinalement et présentant une largeur déterminée et une épaisseur globalement constante.

Le procédé de fabrication comporte l'étape 110 de fournir un moule de fendage et l'étape 120 de positionner chacune des bandes sur le moule, de fendre chaque bande ainsi positionnée pour obtenir et fournir des bandes d'épaisseur variable depuis une première extrémité d'épaisseur la plus fine vers une deuxième extrémité opposée à la première extrémité.

Le procédé de fabrication comporte l'étape 130 d'assembler, notamment par collage, la pluralité de bandes ainsi fendues par superposition pour former un bloc de bandes présentant une première extrémité amincie formée par les premières extrémités les plus fines de la pluralité de bandes fendues et une deuxième extrémité opposée à la première extrémité amincie et formée par les deuxièmes extrémités de la pluralité de bandes fendues.

Le bloc présente ainsi une épaisseur variable formée par la sommes des épaisseurs variables de la pluralité de bandes fendues.

Le procédé de fabrication comporte l'étape 140 de trancher le bloc de bandes selon une direction transversale à la direction longitudinale d'extension de la pluralité de bandes pour obtenir des tranches d'épaisseur prédéterminée.

Le procédé de fabrication comporte l'étape 150 de fournir au moins un patron ayant un format prédéterminé.

Le procédé de fabrication comporte l'étape 160 de disposer chaque tranche sur le patron et découper la tranche au format du patron pour obtenir une portion de tranche respective.

Le procédé de fabrication comporte l'étape 170 d'assembler solidairement, notamment par collage en bord à bord, les portions de tranches formant des sous-éléments d'ornement et/ou de revêtement de sorte à obtenir un élément d'ornement et/ou de revêtement présentant un motif défini.

Le procédé de fabrication comporte l'étape 180 de fournir un film et l'étape 190 de coller sur le film la pluralité de tranches et/ou de portions de tranches formant des sous-éléments d'ornement et/ou de revêtement assemblés.

Le procédé de fabrication comporte l'étape 200 de fournir un support et une étape 210 d'assujettir mécaniquement sur le support, par exemple rigide ou semi rigide, un ou plusieurs éléments d'ornement selon un motif défini, l'ensemble ainsi fabriqué pouvant équiper un article par exemple d'ameublement, de maroquinerie, de bagagerie, de bijouterie.

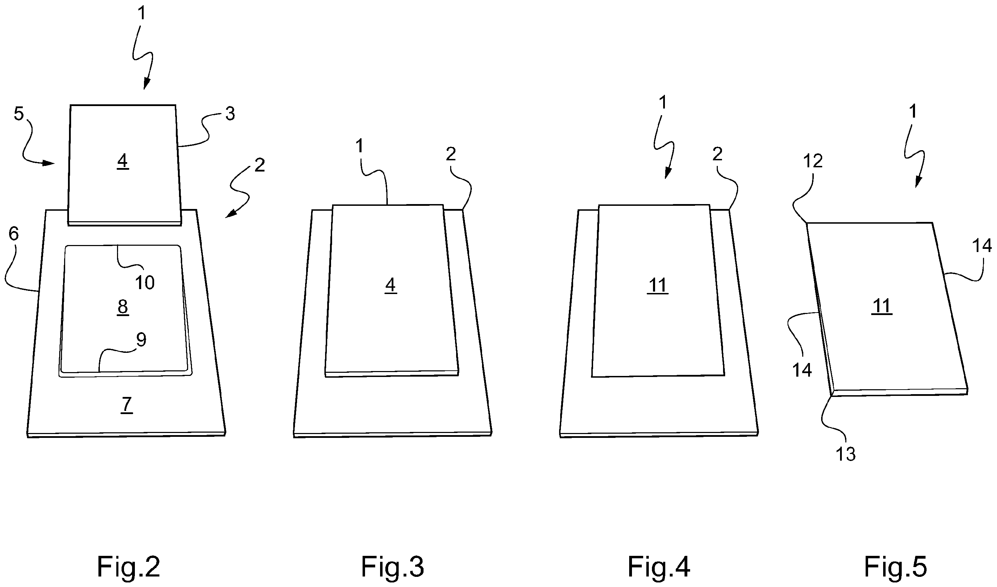

Les figures 2 à 5 représentent schématiquement en perspective les étapes 100 à 120 du procédé illustré sur la figure 1, en vue d'obtenir une pluralité de bandes 1 fendues.

Chaque bande 1 de cuir ou en succédané du cuir ou analogue s'étend globalement longitudinalement et présente un contour 3 définissant une largeur déterminée et une épaisseur globalement constante, une face externe supérieure 4 et une face externe inférieure 5.

La face externe supérieure 4 et la face externe inférieure 5 peuvent être formées respectivement par l'épiderme et la chair du derme s'il s'agit de cuir.

Le moule de fendage 2 s'étend globalement longitudinalement et est pourvu d'un contour 6 ici plus grand que celui des bandes 1, d'une face supérieure plane de référence 7 et d'une cavité 8 ménagée en renfoncement dans la face supérieure plane de référence 7.

La cavité 8 présente un profil longitudinal en rampe, c'est-à-dire qu'elle est plus profonde à une première extrémité 9 de la cavité 8 qu'à une deuxième extrémité 10 opposée à la première extrémité 9.

Chaque bande 1 est adaptée à être positionnée sur le moule 2 et partiellement introduite dans la cavité 8.

Un outil de fendage (non représenté) est utilisé pour fendre la bande 1 le long de la face supérieure plane de référence 7, de sorte que la bande 1 ainsi fendue présente une face externe fendue 11 qui se trouve dans un plan sensiblement identique à celui de la d'une face supérieure plane de référence 7.

La bande 1 ainsi fendue présente une face externe fendue 11, la face externe inférieure et des côtés 14 qui sont formés par le derme du cuir, dont la fleur et/ou la chair, ainsi qu'une épaisseur variable définie ici entre une première extrémité fine 12 et une deuxième extrémité 13 de la bande 1 fendue.

Autrement dit, la bande 1 ainsi fendue présente une épaisseur variable et définie par un profil d'épaisseur prédéterminé depuis la première extrémité 12 vers la deuxième extrémité 13.

Dans l'exemple illustré, le profil d'épaisseur de la bande 1 est continument progressif depuis la première extrémité 12 vers la deuxième extrémité 13.

En variante, le profil d'épaisseur de la bande 1 peut être non continument progressif depuis la première extrémité vers la deuxième extrémité.

Chaque bande de la pluralité de bandes peuvent présenter globalement le même profil d'épaisseur, comme dans l'exemple illustré, ou bien les bandes de la pluralité de bandes peuvent présenter globalement des profils d'épaisseurs au moins partiellement différents.

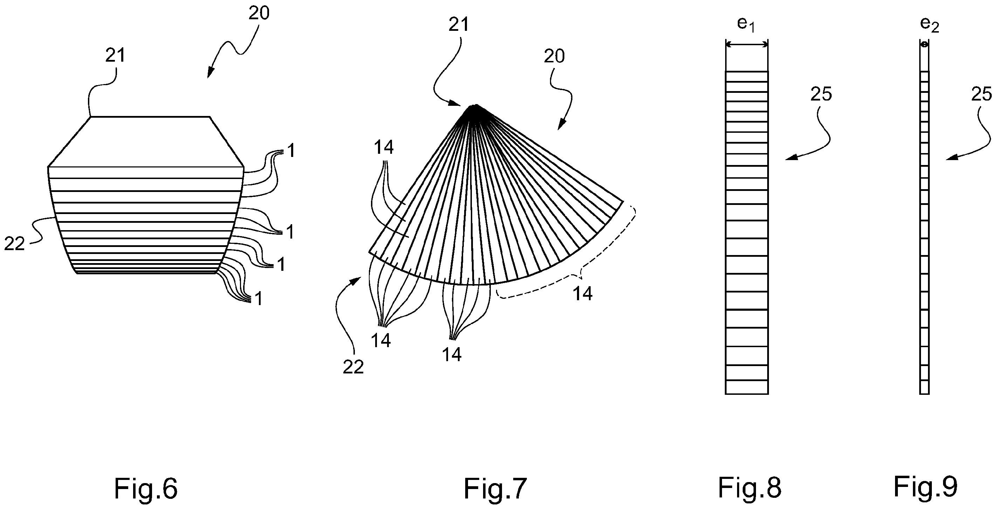

Les figures 6 et 7 montrent un bloc 20 de bandes fendues obtenu par la mise en œuvre de l'étape d'assemblage 130 du procédé illustré sur la figure 1.

Le bloc 20 est ici obtenu par collage de la pluralité de bandes 1 fendues superposées les unes avec les autres.

Le bloc 20 présente une première extrémité amincie 21 formée par les premières extrémités 12 les plus fines de la pluralité de bandes 1 fendues et une deuxième extrémité 22 opposée à la première extrémité amincie 21 et formée par les deuxièmes extrémités 13 de la pluralité de bandes 1 fendues.

Le bloc 20 présente ainsi une épaisseur variable formée par la sommes des épaisseurs variables de la pluralité de bandes 1 fendues.

Dans l'exemple illustré, les bandes 1 sont agencées de sorte que l'épaisseur du bloc 20 est continument progressive depuis sa première extrémité amincie 21 vers sa deuxième extrémité 22 qui est donc élargie.

Le bloc 20 est formé, sur les côtés, par les côtés 14 des bandes 1 fendues.

Les figures 8 et 9 montrent des tranches 25 respectivement d'une première épaisseur prédéterminée e1 et d'une seconde épaisseur prédéterminée e2 inférieure à la première épaisseur prédéterminée e1, obtenues par la mise en œuvre de l'étape140 de découpe du bloc 20 de bandes 1 fendues.

Les tranches 25 sont découpées dans le bloc 20 selon une direction transversale à la direction longitudinale d'extension de la pluralité de bandes 1.

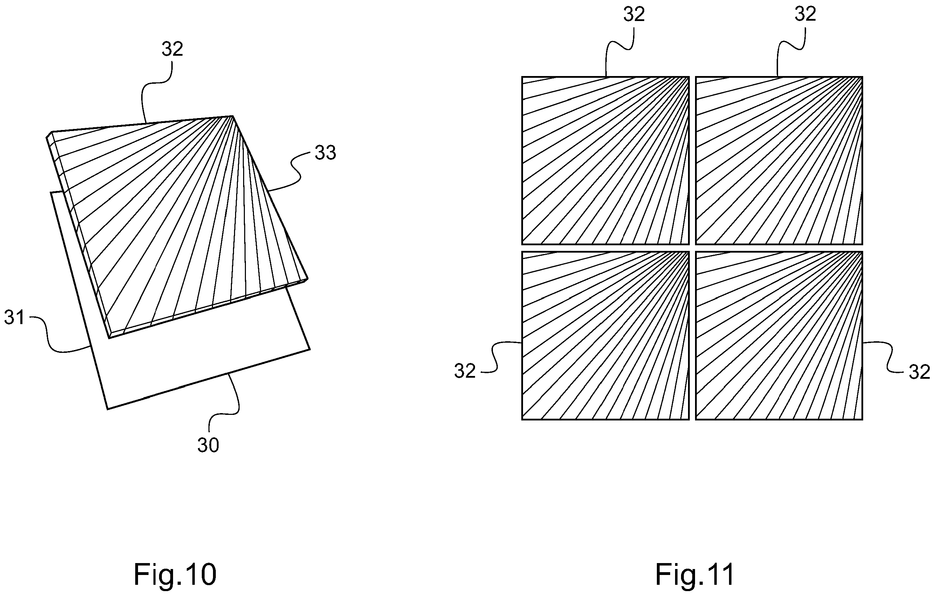

La figure 10 montre les étapes 150 et 160 du procédé illustré sur la figure 1, en vue d'obtenir un sous-élément d'ornement et/ou de revêtement 32.

Chaque tranche est disposée sur un patron 30, par exemple en plastique ou en métal et ayant un format prédéterminé défini par un contour 31, puis découpée au format du patron 30 de sorte à former une portion de tranche correspondant à un sous-élément d'ornement et/ou de revêtement 32 ayant un contour 33 correspondant à celui du patron 30.

Ici, le patron 30 a un contour 31 rectangulaire et en particulier carré.

En variante, le patron peut avoir une forme différente, par exemple circulaire, ronde, ovale, en losange, en triangle, etc.

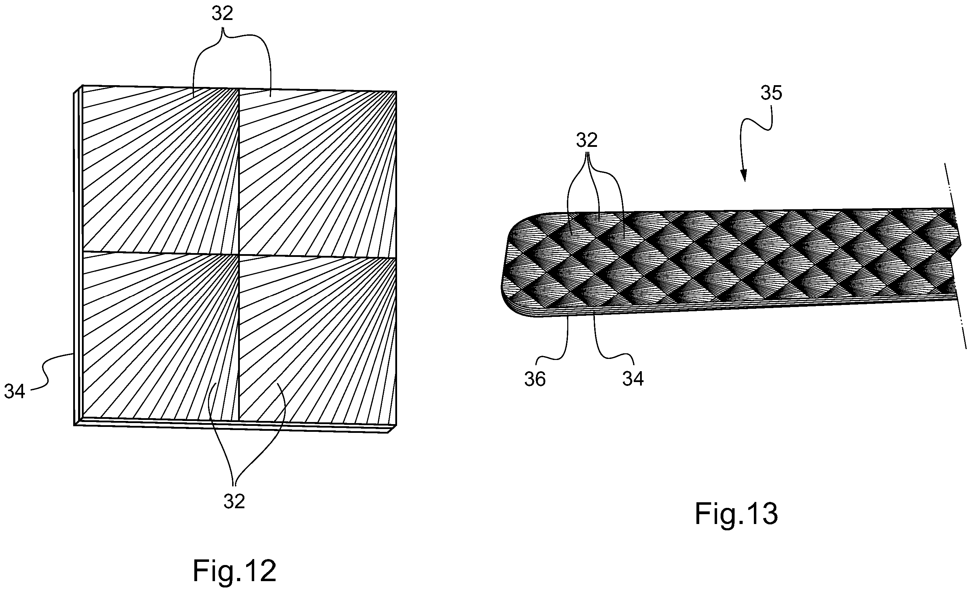

Les figures 11 et 12 représentent schématiquement en perspective les étapes 170 à 190 du procédé illustré sur la figure 1.

Plusieurs sous-éléments d'ornement et/ou de revêtement 32, ou portions de tranches précédemment découpées sur le patron 30, sont assemblés selon un motif déterminé.

Dans l'exemple illustré, un motif est formé de quatre sous-éléments d'ornement et/ou de revêtement 32 disposés en carré.

Ces sous-éléments d'ornement et/ou de revêtement 32 sont collés les uns aux autres en bord à bord.

Un film 34 peut être fourni et chaque ensemble formé de plusieurs sous-éléments d'ornement et/ou de revêtement 32 collés les uns avec les autres peut être collé sur le film 34 afin de renforcer le maintien des sous-éléments d'ornement et/ou de revêtement 32 entre eux.

En variante, il est possible de se passer d'un tel film.

L'ensemble formé des sous-éléments d'ornement et/ou de revêtement 32 collés les uns aux autres et optionnellement collés sur le film forme un élément d'ornement et/ou de revêtement présentant le motif déterminé.

La figure 13 représente schématiquement en perspective les étapes 200 et 210 du procédé illustré sur la figure 1.

Un support 36 est fourni et une pluralité d'éléments d'ornement et/ou de revêtement sont disposés et assujettis mécaniquement, par exemple par collage, sur le support pour former un article 35.

Dans l'exemple décrit, le support 36 est formé d'une ou plusieurs plaques de bois, de sorte que l'article 35 peut former un article d'ameublement.

En variante, le support peut être en cuir ou équivalent, en plastique, en métal de sorte que l'article peut être un article par exemple de maroquinerie, de bagagerie, de bijouterie.

Conformément au procédé de fabrication décrit ci-dessus, il est possible de former des sous-éléments d'ornement et/ou de revêtement présentant des faces principales obtenues à partir des tranches des bandes et donc du derme comportant principalement la chair et la fleur de cuir ou succédané du cuir ou analogue, plutôt qu'à partir des faces externes des bandes, et qui présentent au surplus une apparence associée aux épaisseurs variables des bandes. Ceci permet, une fois les sous-éléments d'ornement et/ou de revêtement assemblés, de former un élément d'ornement et/ou de revêtement présentant un motif prédéfini et qui peut ensuite être fixé sur un support de sorte à former un article par exemple d'ameublement, de maroquinerie, de bagagerie, de bijouterie.

On rappelle plus généralement que l'invention ne se limite pas aux exemples décrits et représentés.

## Revendications

1. Procédé de fabrication d'au moins un élément d'ornement et/ou de revêtement en cuir ou en succédané du cuir ou analogue, à fixer sur un support (36) de sorte à former un article (35) par exemple d'ameublement, de maroquinerie, de bagagerie et/ou de bijouterie, comportant les étapes :
- de fournir (120) une pluralité de bandes en cuir ou en succédané du cuir ou analogue (1), chaque bande s'étendant globalement longitudinalement ;
- d'assembler (130) la pluralité de bandes par superposition pour former un bloc de bandes (20) ;
- de trancher (140) le bloc de bandes selon une direction transversale à la direction longitudinale d'extension de la pluralité de bandes pour obtenir des tranches (25) d'épaisseur prédéterminée ;
le procédé étant **caractérisé en ce que** chaque bande présente une épaisseur variable depuis une première extrémité (12) d'épaisseur la plus fine vers une deuxième extrémité (13) opposée à la première extrémité, **en ce que** le bloc de bandes (20) présente une première extrémité amincie (21) formée par les premières extrémités les plus fines de la pluralité de bandes et une deuxième extrémité (22) opposée à la première extrémité amincie et formée par les deuxièmes extrémités de la pluralité de bandes, le bloc présentant une épaisseur variable formée par la sommes des épaisseurs variables de la pluralité de bandes, et **en ce qu'**il comporte l'étape :
- d'assembler (170) solidairement une pluralité de tranches et/ou de portions de tranches formant des sous-éléments d'ornement et/ou de revêtement (32) de sorte à obtenir un élément d'ornement et/ou de revêtement présentant un motif défini.

2. Procédé selon la revendication 1, **caractérisé en ce qu'**il comporte les étapes de fournir (110) un moule de fendage (2), de fournir (100) des bandes (1) d'épaisseur globalement constante, de positionner chacune des bandes sur le moule et de fendre chaque bande ainsi positionnée pour obtenir les bandes d'épaisseur variable depuis la première extrémité (12) d'épaisseur la plus fine vers la deuxième extrémité (13).

3. Procédé selon l'une des revendications 1 et 2, **caractérisé en ce qu'**il comporte une étape de collage de la pluralité de bandes (1) par superposition pour former le bloc de bandes (20).

4. Procédé selon l'une quelconque des revendications 1 à 3, **caractérisé en ce qu'**il comporte une étape de fournir (150) au moins un patron (30), une étape de disposer chaque tranche (25) sur le patron et une étape de découper la tranche au format du patron pour obtenir une portion de tranche respective.

5. Procédé selon l'une quelconque des revendications 1 à 4, **caractérisé en ce qu'**il comporte une étape de collage en bord à bord de la pluralité de tranches et/ou de portions de tranches formant des sous-éléments d'ornement et/ou de revêtement (32).

6. Procédé selon l'une quelconque des revendications 1 à 5, **caractérisé en ce qu'**il comporte une étape de fourniture (180) d'un film (34) et une étape (190) de collage de la pluralité de tranches et/ou de portions de tranches formant des sous-éléments d'ornement et/ou de revêtement (32) assemblés sur le film.

7. Procédé selon l'une quelconque des revendications 1 à 6, **caractérisé en ce qu'**il comporte une étape de fourniture (220) d'un support (36) et une étape d'assujettissement mécanique (210) d'un ou plusieurs éléments d'ornement sur le support selon un motif défini, l'ensemble pouvant équiper un article (35) par exemple d'ameublement, de maroquinerie, de bagagerie, de bijouterie.

8. Procédé selon l'une quelconque des revendications 1 à 7, **caractérisé en ce qu'**au moins une bande (1) présente une épaisseur variable définie par un profil d'épaisseur prédéterminé depuis la première extrémité (12) vers la deuxième extrémité (13).

9. Procédé selon la revendication 8, **caractérisé en ce qu'**au moins une bande (1) présente une épaisseur variable définie par un profil d'épaisseur continument progressif depuis la première extrémité (12) vers la deuxième extrémité (13).

10. Procédé selon l'une des revendications 8 et 9, **caractérisé en ce qu'**au moins une bande (1) présente une épaisseur variable définie par un profil d'épaisseur non continument progressif depuis la première extrémité vers la deuxième extrémité.

11. Procédé selon l'une quelconque des revendications 8 à 10, **caractérisé en ce que** chaque bande (1) de la pluralité de bandes présente globalement le même profil d'épaisseur prédéterminé.

12. Procédé selon l'une quelconque des revendications 8 à 10, **caractérisé en ce que** les bandes (1) de la pluralité de bandes présentent globalement des profils d'épaisseurs au moins partiellement différents.

## Patentansprüche

1. Verfahren zur Herstellung von mindestens einem Ornament- und/oder Bezugselement aus Leder oder Lederersatzmaterial oder Ähnlichem, das auf einem Träger (36) zu befestigen ist, so dass ein Artikel (35) beispielsweise aus Möbeln, Lederwaren, Gepäck und/oder Schmuck entsteht, das folgende Schritte umfasst:
- Bereitstellung (120) einer Vielzahl von Bändern aus Leder oder Lederersatzmaterial oder Ähnlichem (1), wobei sich jedes Band insgesamt längs erstreckt;
- Zusammenfügen (130) der Vielzahl von Bändern durch Überlagerung zu einem Bandblock (20);
- Schneiden (140) des Bandblocks in einer Richtung quer zur Längsrichtung der Ausdehnung der Vielzahl von Bändern, um Scheiben (25) mit einer vorbestimmten Dicke zu erhalten;
wobei das Verfahren **dadurch gekennzeichnet ist, dass** jedes Band eine variable Dicke von einem ersten Ende (12) mit der dünnsten Dicke zu einem zweiten Ende (13) aufweist, das dem ersten Ende gegenüberliegt, wobei der Bandblock (20) ein erstes verdünntes Ende (21) aufweist, das von den ersten dünnsten Enden der Vielzahl von Bändern gebildet wird, und ein zweites Ende (22), das dem ersten verdünnten Ende gegenüberliegt und von den zweiten Enden der Vielzahl von Bändern gebildet wird, wobei der Block mit einer variablen Dicke durch die Summe der variablen Dicke der Vielzahl von Bändern gebildet wird und, dass das Verfahren folgenden Schritt umfasst:
- integrales Zusammenfügen (170) eine Vielzahl von Scheiben und/oder Abschnitten von Scheiben, die Unterelemente von Ornament- und/oder Bezugselementen (32) bilden, um ein Ornament- und/oder Bezugselement mit einem definierten Muster zu erhalten.

2. Verfahren nach Anspruch 1, **dadurch gekennzeichnet, dass** es die Schritte des Bereitstellens (110) einer Spaltform (2), des Bereitstellens (100) von Bändern (1) mit im Wesentlichen konstanter Dicke, des Positionierens jedes der Bänder auf der Form und des Spaltens jedes so positionierten Bandes umfasst, um die Bänder mit variabler Dicke vom ersten Ende (12) mit der dünnsten Dicke zum zweiten Ende (13) zu erhalten.

3. Verfahren nach einem der Ansprüche 1 und 2, **dadurch gekennzeichnet, dass** es einen Schritt zum Kleben der Vielzahl von Bändern (1) durch Überlagerung zur Bildung des Bandblocks (20) umfasst.

4. Verfahren nach einem der Ansprüche 1 bis 3, **dadurch gekennzeichnet, dass** es einen Schritt zum Bereitstellen (150) mindestens eines Musters (30), einen Schritt zum Anordnen jeder Scheibe (25) auf dem Muster und einen Schritt zum Zuschneiden der Scheibe in das Musterformat umfasst, um einen entsprechenden Scheibenabschnitt zu erhalten.

5. Verfahren nach einem der Ansprüche 1 bis 4, **dadurch gekennzeichnet, dass** es einen Schritt des Klebens von Kante zu Kante der Vielzahl von Scheiben und/oder Abschnitten von Scheiben umfasst, die Unterelemente von Ornament- und/oder Bezugselementen (32) bilden.

6. Verfahren nach einem der Ansprüche 1 bis 5, **dadurch gekennzeichnet, dass** es einen Schritt (180) des Bereitstellens einer Folie (34) und einen Schritt (190) des Klebens der Vielzahl von auf der Folie montierten Scheiben und/oder Abschnitten von Scheiben, die Unterelemente von Ornament- und/oder Bezugselementen (32) bilden, umfasst.

7. Verfahren nach einem der Ansprüche 1 bis 6, **dadurch gekennzeichnet, dass** es einen Schritt des Bereitstellens (220) eines Trägers (36) und einen Schritt der mechanischen Befestigung (210) eines oder mehrerer Ornamentelemente auf dem Träger nach einem definierten Muster umfasst, wobei die Baugruppe einen Artikel (35) beispielsweise mit Möbeln, Lederwaren, Gepäckstücken, Schmuck ausstatten kann.

8. Verfahren nach einem der Ansprüche 1 bis 7, **dadurch gekennzeichnet, dass** mindestens ein Band (1) eine variable Dicke aufweist, die durch ein vorbestimmtes Dickenprofil vom ersten Ende (12) zum zweiten Ende (13) definiert ist.

9. Verfahren nach Anspruch 8, **dadurch gekennzeichnet, dass** mindestens ein Band (1) eine variable Dicke aufweist, die durch ein kontinuierlich fortschreitendes Dickenprofil vom ersten Ende (12) zum zweiten Ende (13) definiert ist.

10. Verfahren nach einem der Ansprüche 8 und 9, **dadurch gekennzeichnet, dass** mindestens ein Band (1) eine variable Dicke aufweist, die durch ein nicht kontinuierlich fortschreitendes Dickenprofil vom ersten Ende zum zweiten Ende definiert ist.

11. Verfahren nach einem der Ansprüche 8 bis 10, **dadurch gekennzeichnet, dass** jedes Band (1) der Vielzahl von Bändern insgesamt das gleiche vorbestimmte Dickenprofil aufweist.

12. Verfahren nach einem der Ansprüche 8 bis 10, **dadurch gekennzeichnet, dass** die Bänder (1) der Vielzahl von Bändern insgesamt mindestens teilweise unterschiedliche Dickenprofile aufweisen.

## Claims

1. Method for manufacturing at least one ornamental and/or covering element made of leather or made of a leather substitute or similar, to be fastened onto a support (36) so as to form an item (35) for example for furnishings, leather goods, luggage and/or jewellery, including the steps:
- providing (120) a plurality of strips made of leather or made of a leather substitute or similar (1), each strip extending longitudinally overall;
- assembling (130) the plurality of strips by superposition to form a block of strips (20);
- slicing (140) the block of strips in a direction transverse to the longitudinal direction of extension of the plurality of strips to obtain slices (25) having a predetermined thickness,
the method being **characterised in that** each strip has a variable thickness from a first end (12) having the finest thickness to a second end (13) opposite to the first end, **in that** the block of strips (20) has a first thinned end (21) formed by the first finest ends of the plurality of strips and a second end (22) opposite to the first thinned end and formed by the second ends of the plurality of strips, the block having a variable thickness formed by the sum of the variable thicknesses of the plurality of strips, and **in that** it includes the step:
- rigidly assembling (170) a plurality of slices and/or portions of slices forming ornamental and/or covering sub-elements (32) so as to obtain an ornamental and/or covering element having a defined pattern.

2. Method according to claim 1, **characterised in that** it includes the steps of providing (110) a splitting mould (2), providing (100) strips (1) having a generally constant thickness, positioning each of the strips on the mould and splitting each strip thus positioned to obtain the strips having a variable thickness from the first end (12) having the finest thickness to the second end (13).

3. Method according to one of claims 1 and 2, **characterised in that** it includes a step of gluing the plurality of strips (1) by superposition to form the block of strips (20).

4. Method according to any one of claims 1 to 3, **characterised in that** it includes a step of providing (150) at least one pattern (30), a step of arranging each slice (25) on the pattern and a step of cutting the slice into the format of the pattern to obtain a respective slice portion.

5. Method according to any one of claims 1 to 4, **characterised in that** it includes a step of gluing the plurality of slices and/or portions of slices forming ornamental and/or covering sub-elements (32) edge to edge.

6. Method according to any one of claims 1 to 5, **characterised in that** it includes a step of providing (180) a film (34) and a step (190) of gluing the plurality of slices and/or portions of slices forming ornamental and/or covering sub-elements (32) assembled on the film.

7. Method according to any one of claims 1 to 6, **characterised in that** it includes a step of providing (220) a support (36) and a step of mechanically securing (210) one or more ornamental elements onto the support according to a defined pattern, wherein the assembly can be provided in an item (35) for example for furnishings, leather goods, luggage, jewellery.

8. Method according to any one of claims 1 to 7, **characterised in that** at least one strip (1) has a variable thickness defined by a predetermined thickness profile from the first end (12) to the second end (13).

9. Method according to claim 8, **characterised in that** at least one strip (1) has a variable thickness defined by a continuously progressive thickness profile from the first end (12) to the second end (13).

10. Method according to one of claims 8 and 9, **characterised in that** at least one strip (1) has a variable thickness defined by a thickness profile that is not continuously progressive from the first end to the second end.

11. Method according to any one of claims 8 to 10, **characterised in that** each strip (1) of the plurality of strips has the same predetermined thickness profile overall.

12. Method according to any one of claims 8 to 10, **characterised in that** the strips (1) of the plurality of strips have at least partially different thickness profiles overall.
